# EUROPÄISCHE PATENTANMELDUNG

(11) **EP 1 154 544 A2**
(43) Veröffentlichungstag der Anmeldung: **14.11.2001**
(21) Anmeldenummer: 01111426.1
(22) Anmeldetag: 10.05.2001
(51) Int. Cl.: H02K 3/52, H02K 3/18

(54) **Stator**

(30) Priorität: 11.05.2000 DE 10022961
(71) Anmelder: ROBERT BOSCH GMBH, 70442 Stuttgart (DE)
(72) Erfinder: Daub, Hans-Günter, 77836 Rheinmünster (DE); Weigold, Thomas, 76532 Baden-Baden (DE); Zierer, Gerald, 77815 Bühl (DE); Pfetzer, Johannes, 77815 Bühl (DE); Riehl, Günther, 77815 Bühl (DE); Schmitz, Matthias, Dr., 38518 Gifhorn (DE); Rocklage, Gerta, Dr., 44797 Bochum (DE); Melzer, Frank, Dr., 70499 Stuttgart (DE); Heidrich, Torsten, 71565 Vaihingen/Enz (DE); Linde, Hansjürgen, Prof.- Dr., 96450 Coburg (DE); Neumann, Uwe, 96050 Bamberg (DE); Rehklau, Andreas, 96450 Coburg (DE)

(57) **Zusammenfassung**

Ein Stator nach dem Stand der Technik wird aus einem Blechpaket gebildet, das durch eine Kunststoffbeschichtung isoliert wird.

Ein erfindungsgemässer Stator (20) kann direkt aus einzelnen Blechlaminaten (1) gebildet werden und die Kunststoffbeschichtung (22) bildet einen wasserdichten Innenkanal.

## Beschreibung

### Stand der Technik

Die Erfindung geht aus von einem Stator nach der Gattung des Anspruchs 1.

Aus der EP 0 880 215 A2 ist schon ein Stator bekannt, der eine Kunststoffbeschichtung hat. Die Kunststoffbeschichtung wird durch Kunststoffspritzen aufgebracht und gleichzeitig können auch Aufnahmen geformt werden, die das Montieren von einem Lager oder einem Stecker vereinfachen.
Die einzelnen Blechlaminate des Stators müssen jedoch vor dem Kunststoffspritzen zu einem Blechpaket zusammengefügt werden. Beim Kunststoffumspritzen müssen weiterhin die Blechlaminate an den jeweiligen Statorpolzähnen zusammengedrückt werden, damit keine Lücke zwischen einzelnen Blechlaminaten entsteht, in die Kunststoff gelangen kann.

### Vorteile der Erfindung

Der erfindungsgemässe Stator mit den kennzeichnenden Merkmalen des Anspruchs 1 hat demgegenüber den Vorteil, dass auf einfache Art und Weise die Herstellung eines Stators vereinfacht wird, wodurch sich der Stator eines elektrischen Motors einfacher, schneller und günstiger zusammenbauen lässt und ein Abstand zwischen Stator und Rotor minimiert wird.

Durch die in den abhängigen Ansprüchen aufgeführten Massnahmen sind vorteilhafte Weiterbildungen und Verbesserungen des im Anspruch 1 genannten Stators möglich.

Es ist vorteilhaft, die Kunststoffbeschichtung des Stators und damit einen wasserdichten Innenkanal durch Kunststoffspritzen herzustellen.

Um das Zusammenhalten der Blechlaminate nach Aufbringen der Kunststoffbeschichtung zu verbessern, ist es vorteilhaft, dass das Blechlaminat in einem bestimmten radialen Abstandswinkel um die Mittelachse ein Element hat, das das Zusammenhalten der Blechlaminate verbessert.

Für das Aufbringen von Spulen auf das zumindest eine Blechlaminat ist es vorteilhaft, dass das Blechlaminat radial sich nach aussen erstreckende Vorsprünge hat, auf denen die Spulen aufgeschoben werden können.

Eine vorteilhafte Ausbildung der Erfindung ist dadurch gegeben, dass um die Vorsprünge der Blechlaminate ein Spulenkörper angespritzt ist, weil dadurch das Montieren von Spulen auf dem Stator vereinfacht wird.

Für die Aufwicklung einer Spule in den Spulenkörper ist es vorteilhaft, wenn die Kunststoffbeschichtung einen Wickelstützpunkt hat, welcher das Erfassen des Stators vereinfacht und wenn eine unterste Wickelebene des Spulenkörpers den Spulenkörper nur berührt, weil dadurch der Spulenkörper zum Wickeln frei zugänglich ist und ein Wickelkopf einer Wicklungsmaschine frei um den Spulenkörper kreisen kann.

Wenn der Spulenkörper oder die Kunststoffbeschichtung weiterhin eine Aufnahme hat, kann in vorteilhafter Weise eine Schneid-, Klemmverbindung mit einem Spulendraht und äusseren Anschlüssen hergestellt werden.

Die Bildung eines Blechpakets aus Blechlaminat kann weiterhin vorteilhaft sein.

### Zeichnung

Ausführungsbeispiele der Erfindung sind in der Zeichnung vereinfacht dargestellt und in der nachfolgenden Beschreibung näher erläutert.

Es zeigen
Figur 1 a, b zwei Blechlaminate und Figur 1c ein Blechlaminatstapel,
Figur 2 Blechlaminate mit Kunststoffbeschichtung,
Figur 3 Blechlaminate mit Kunststoffbeschichtung und Spulenkörper,
Figur 4 einen radialen Querschnitt der Figur 3,
Figur 5 ein erfindungsgemässer Stator, und
Figur 6 ein erfindungsgemässer Stator mit Stanzgitter.

### Beschreibung der Ausführungsbeispiele

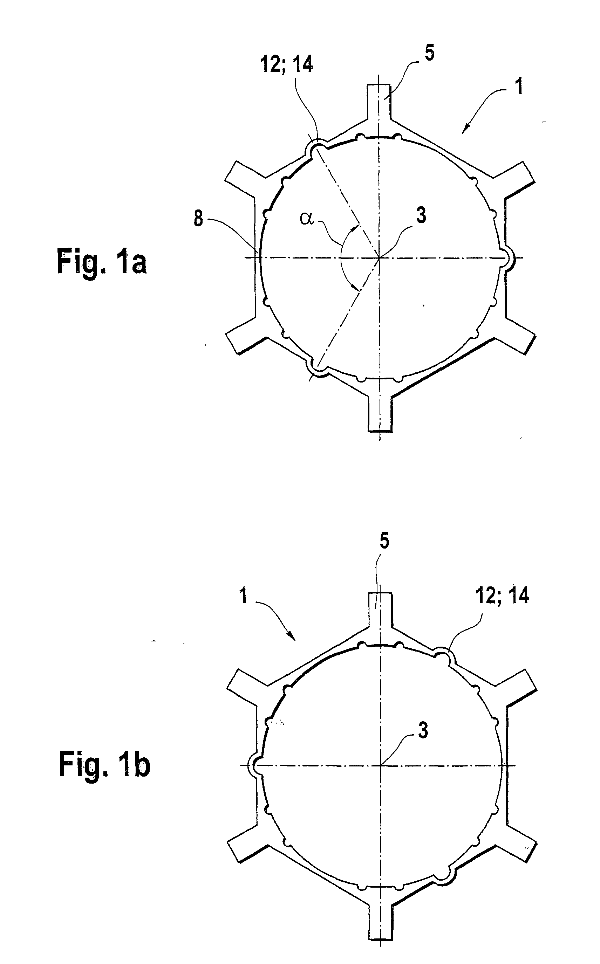

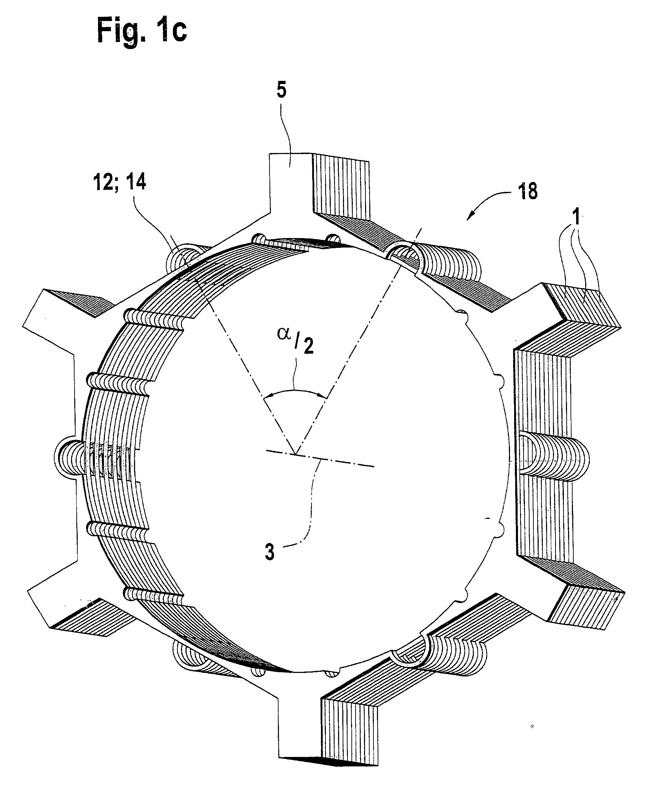

Figur 1a und b zeigen ein Blechlaminat 1. Das Blechlaminat 1 hat beispielsweise eine ringförmige oder wie in Figur 1 eine sechseckförmige Struktur mit einer Mittelachse 3, zu der das Blechlaminat 1 beispielsweise punktsymmetrisch ausgebildet ist. Das Blechlaminat 1 wird gebildet durch Stege 8, zwischen denen sich, bspw. an Eckpunkten des Blechlaminats 1, Vorsprünge 5 befinden. Der Vorsprung 5 erstreckt sich radial nach aussen und hat beispielsweise einen rechteckigen Querschnitt.
In einem radialen Abstandswinkel α um die Mittelachse 3 befindet sich ein Element 12, das das Zusammenhalten eines Blechpakets 18 nach der Kunststoffbeschichtung verbessert. Dieses Element 12 ist in diesem Ausführungsbeispiel als halbseitig offener Bogen 14 ausgeführt.
Figur 1b zeigt ein Blechlaminat 1, das im Gegensatz zur Figur 1a bspw. um 60° gedreht ist. Für die Bildung eines losen Blechlaminatstapels 18 oder eines Blechpakets 18 werden jeweils ein Blechlaminat 1 nach Figur 1a und 1b bspw. abwechselnd aufeinander gestapelt und eventuell paketiert. Ein solches Blechpaket 18 zeigt Figur 1c. In einem radialen Abstandswinkel von α/2 ist zwischen zwei Vorsprüngen 5 jeweils abwechselnd ein halbseitig offener Bogen 14 und ein Steg 8 in Stapelrichtung vorhanden.

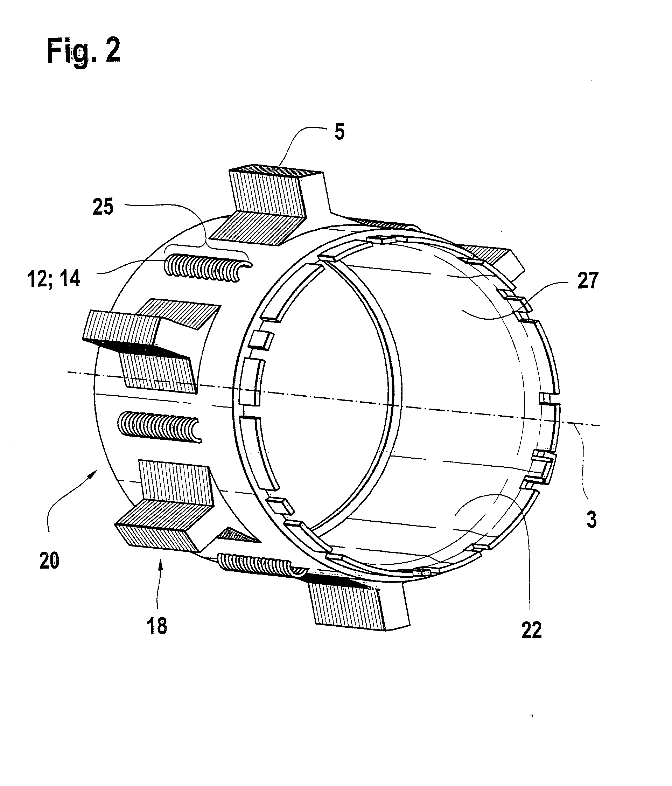

Figur 2 zeigt Blechlaminate 1 oder ein Blechpaket 18 mit einer Kunststoffbeschichtung 22. Für gleiche oder gleich wirkende Teile werden in den folgenden Figuren die gleichen Bezugszeichen wie in den vorherigen Figuren verwendet.
Der beispielsweise wie in Figur 1c hergestellte Blechlaminatstapel 18, der aus lose aufeinandergestapelten Blechlaminaten 1 gebildet worden ist, wird in eine Spritzform eingeführt und dort unter Druck zusammengehalten. Als Angriffsflächen für die Druckaufbringung können beispielsweise die Vorsprünge 5 dienen. Nach dem Aufbringen der Kunststoffbeschichtung 22, beispielsweise durch Kunststoffspritzen, wird der Blechlaminatstapel 18 durch diese teilweise vorhandene Kunststoffbeschichtung 22 zusammengehalten.
Das Zusammenhalten der einzelnen Blechlaminate 1 wird durch eine von den einzelnen Bogen 14 gebildete Bogenreihe 25 verbessert, die sich mit Kunststoff gefüllt hat und von Kunststoff umschlossen wird. Die Bogenreihe 25, ebenso wie die Vorsprünge 5, ragt in diesem Beispiel aus der Oberfläche der Kunststoffbeschichtung heraus. Die Kunststoffbeschichtung 22 bildet einen wasserdichten Innenkanal 27, durch den ein Medium, z. B. ein flüssiges Medium gefördert werden kann. Die Kunststoffbeschichtung 22 kann sich beispielsweise in beiden Axialrichtungen über eine axiale Länge des Blechpakets 18 hinaus fortsetzen. Ein so hergestelltes Bauteil ist beispielsweise ein Stator für eine elektromotorisch betriebene Flüssigkeitspumpe, wobei die Vorsprünge 5 Statorpolzähne bilden.
Auf die Statorpolzähne können vorgefertigte Spulen aufgeschoben werden.

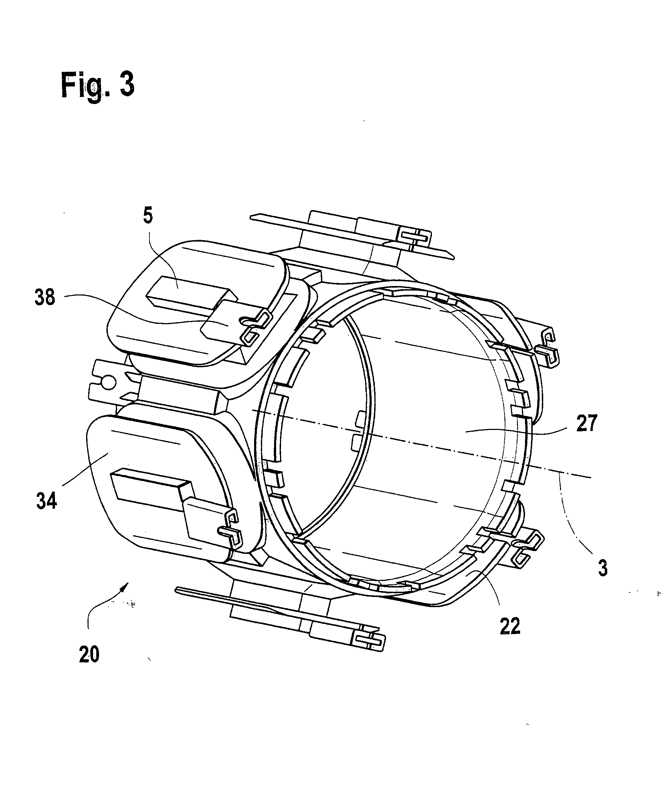

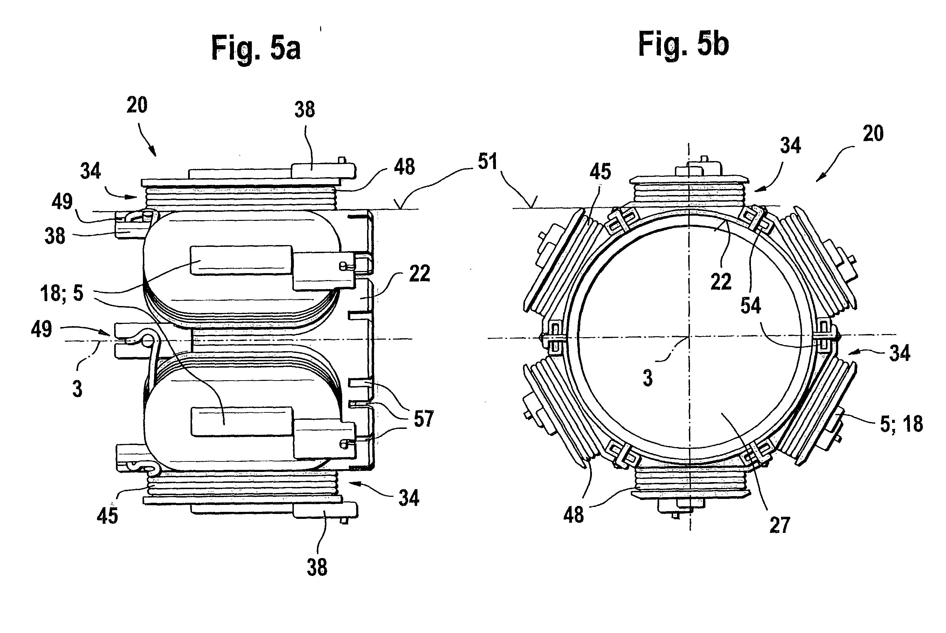

Figur 3 zeigt eine Weiterbildung eines Blechpakets 18 mit Kunststoffbeschichtung 22 aus Figur 2.
Um die Vorsprünge 5, die Statorpolzähne bilden, ist aus Kunststoff ein Spulenkörper 34 angespritzt worden. Diese können in einem Arbeitsgang mit der Aufbringung der Kunststoffbeschichtung 22 hergestellt werden. Auf den Spulenkörper 34 kann eine Spule 45 (Fig. 5) aus elektrisch leitendem Draht aufgewickelt werden. Diese Spule 45 umschliesst den Vorsprung 5 und dient zur magnetischen Erregung eines nicht dargestellten Rotors. Zur äusseren elektrischen Stromversorgung der Spule 45 muss eine Verbindung hergestellt werden. Dies geschieht beispielsweise durch eine Aufnahme 38, in der eine Schneid-, Klemmverbindung zwischen einem Spulendrahtende und einer äusseren oder weiteren elektrischen Anschlussleitung hergestellt werden kann. Dieses mechanische Verbinden ist sehr einfach und schnell gegenüber einem Löten zum Verbinden von elektrischen Leitungen.

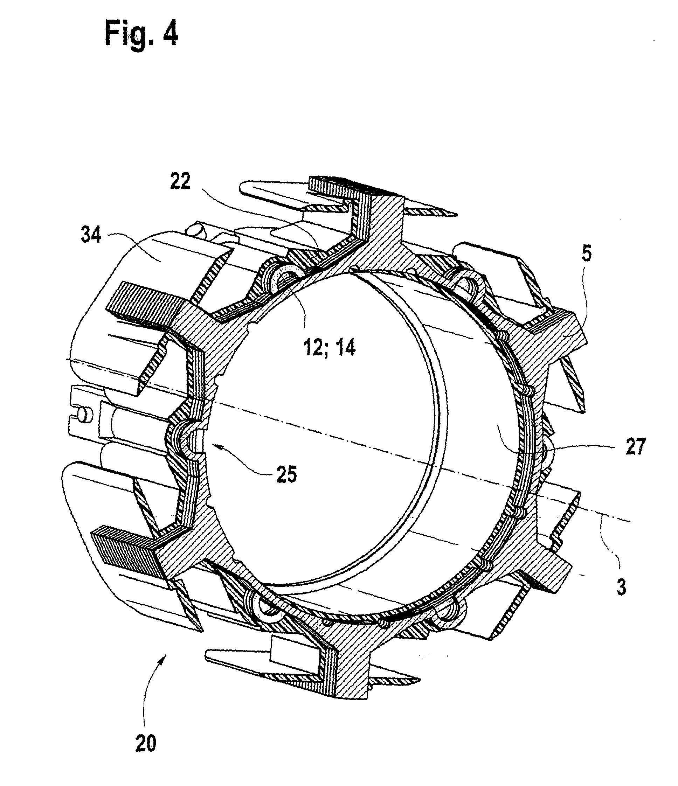

Figur 4 zeigt einen radialen Querschnitt der Figur 3.
Im Gegensatz zu dem Ausführungsbeispiel von Figur 2 ist die Bogenreihe 25 vollständig vom Kunststoff umschlossen.
Die Vorsprünge 5 sind vom Kunststoff nicht vollständig umschlossen, so dass weiterhin ein Aussenteil 30 (Fig. 7) auf das Blechpaket 18 aufgepresst und dadurch festgehalten werden kann.
Die Vorsprünge 5 können voneinander magnetisch getrennt werden. Dies verringert die magnetischen Verluste während des Betriebs des Stators 20. Die Trennung der Vorsprünge 5 untereinander kann beispielsweise dadurch erfolgen, dass zuerst ein Blechpaket ausgebildet nach Figur 4 hergestellt wird und dann der jeweilige Steg 8, bzw. die Verbindung zwischen den Vorsprüngen 5 durchtrennt wird.

Figur 5 zeigt einen erfindungsgemässen Stator 20.
In den Spulenkörper 34 ist eine Wicklung 45 gewickelt worden. Der Spulenkörper 34 hat eine unterste Wicklungsebene 51, die durch eine Linie gekennzeichnet ist, die der Mittelachse 3 am nächsten ist. Die unterste Wicklungsebene 51 schneidet die direkt benachbarten Spulenkörper 34 der Kunststoffbeschichtung 22 nicht. So ist der Spulenkörper 34 zum Wickeln frei zugänglich und ein Wickelkopf einer Wicklungsmaschine kann frei um den Spulenkörper 34 kreisen. Die Kunststoffbeschichtung 22 oder wie in diesem Ausführungsbeispiel der Spulenkörper 34 hat einen Wickelstützpunkt 54, der zum besseren Greifen des Blechlaminats 18 oder der Kunststoffbeschichtung während des Wicklungsvorgangs dient. In diesem Beispiel dient die Aufnahme 38 als Wickelstützpunkt 54.
Ein Ende eines Spulendrahts 48 der Wicklung 45 ist in der Aufnahme 38 angeordnet und bspw. in einem Schlitz 49 eingeklemmt.
Kerben 57 am Stator 20 dienen bspw. zur Fixierung beim Einbau des Stators 20 in eine Pumpe.

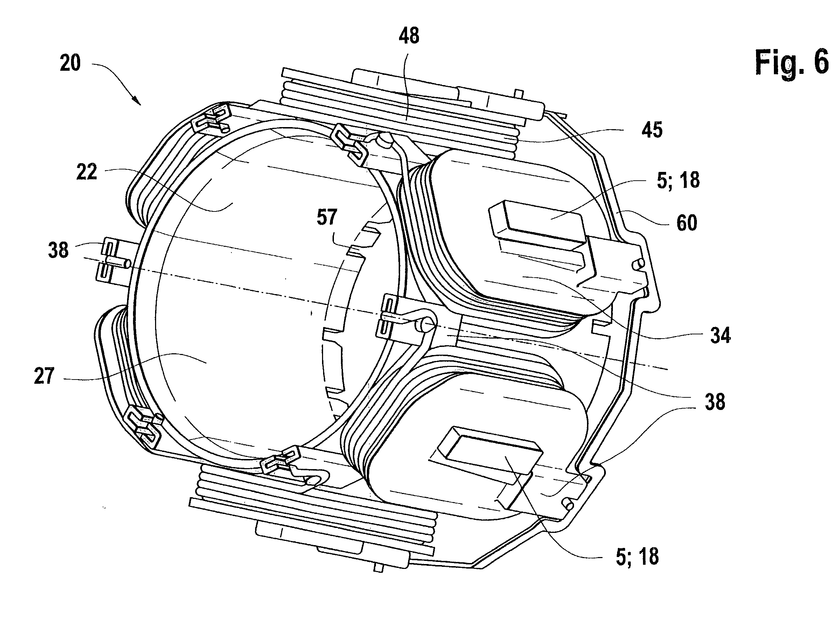

Figur 6 zeigt ein erfindungsgemässen Stator 20 gemäss Figur 5 mit einem Stanzgitter 60, das eine elektrische Verbindung der Wicklungen 45 untereinander bildet.

## Patentansprüche

1. Stator bestehend aus zumindest einem Blechlaminat (1) und einer zumindest teilweise vorhandenen Kunststoffbeschichtung (22),
**dadurch gekennzeichnet,**
**dass** das zumindest eine Blechlaminat (1) durch die Kunststoffbeschichtung (22) zusammengehalten ist, und
**dass** der Stator (20) entlang einer Mittelachse (3) einen wasserdichten Innenkanal (27) hat.

2. Stator nach Anspruch 1,
**dadurch gekennzeichnet,**
**dass** die Kunststoffbeschichtung (22) des Stators (20) durch Kunststoffspritzen hergestellt ist, und
**dass** die Kunststoffbeschichtung (22) den Innenkanal (27) begrenzt bildet.

3. Stator nach Anspruch 1,
**dadurch gekennzeichnet, dass**
das Blechlaminat (1) zumindest ein Element (12) hat, das die Verbindung der Blechlaminate (1) mit der Kunststoffbeschichtung (22) verbessert.

4. Stator nach Anspruch 3,
**dadurch gekennzeichnet,**
**dass** der Stator (20) und das Blechlaminat (1) die Mittelachse (3) als Symmetrieachse haben, und
**dass** an dem Blechlaminat (1) in einem bestimmten radialen Abstandswinkel (α), insbesondere von 60 Grad um die Mittelachse (3), zwei direkt benachbarte Elemente (12) das angeordnet sind.

5. Stator nach Anspruch 3 oder 4,
**dadurch gekennzeichnet, dass**
das Element (12) ein halbseitig offener Bogen (14) ist.

6. Stator nach Anspruch 4 oder 5,
**dadurch gekennzeichnet, dass**
zumindest ein Blechlaminat (1) eines einzelnen Blechpakets (18) mit dem Element (12) um einen bestimmten Winkel ( ) um die Mittelachse (3) gegenüber dem zumindest einen anderen Blechlaminat (1) verdreht ist.

7. Stator nach einem oder mehrerem der Ansprüche 1,3,4 oder 6,
**dadurch gekennzeichnet, dass**
zumindest ein Blechlaminat (1) zumindest einen sich radial nach aussen erstreckenden Vorsprung (5) hat, auf dem eine elektrische Wicklung (45) angeordnet ist.

8. Stator nach Anspruch 7,
**dadurch gekennzeichnet, dass**
an zumindest einem Vorsprung (5) des Blechlaminats (1) ein Spulenkörper (34) angespritzt ist.

9. Stator nach Anspruch 8,
**dadurch gekennzeichnet,**
**dass** die elektrische Wicklung (45) am Spulenkörper (34) angeordnet ist,
**dass** die elektrische Wicklung (45) aus zumindest einem Spulendraht (48) besteht, und
**dass** an der Kunststoffbeschichtung (22) zumindest eine Aufnahme (38) angeordnet ist, die zu einer Schneidklemmverbindung mit einem Spulendraht (48) dient.

10. Stator nach Anspruch 9,
**dadurch gekennzeichnet,**
**dass** an dem Spulenkörper (34) die zumindest eine Aufnahme (38) angeordnet ist.

11. Stator nach einem oder mehreren der Ansprüche 8 bis 10,
**dadurch gekennzeichnet,**
**dass** auf den Spulenkörper (34) eine Wicklung (45) in zumindest einer Wickelebene gewickelt ist,
**dass** es eine unterste Wickelebene (51) eines Spulenkörpers (34) gibt, die der Mittelachse (3) am nächsten ist, und
**dass** die unterste Wickelebene (51) die direkt benachbarten Spulenkörper (34) nicht schneidet.

12. Stator nach einem oder mehreren der Ansprüche 8 bis 11,
**dadurch gekennzeichnet, dass**
der Spulenkörper (34) für einen Wickelvorgang des Spulenkörpers (34) mit einer Wicklung (45) zumindest einen Wickelstützpunkt (54) hat.

13. Stator nach einem oder beiden der Ansprüche 7 oder 8,
**dadurch gekennzeichnet, dass**
auf den zumindest einen Vorsprung (5) des Blechlaminats (1) ein Aussenteil (30) aufgeschoben ist.

14. Stator nach Anspruch 13,
**dadurch gekennzeichnet, dass**
das Aussenteil (30) aus einzelnen Blechschichten gebildet ist.

15. Stator nach einem oder mehreren der vorherigen Ansprüche,
**dadurch gekennzeichnet, dass**
das zumindest eine Blechlaminat (1) ein Blechpaket (18) bildet.
